# EUROPÄISCHE PATENTSCHRIFT

(11) **EP 3 969 680 B1**
(45) Veröffentlichungstag und Bekanntmachung des Hinweises auf die Patenterteilung: **17.09.2025**
(21) Anmeldenummer: 20729611.2
(22) Anmeldetag: 19.02.2020
(51) Int. Cl.: E03F 5/14, B01D 24/12, C02F 3/04

(54) **TROPFKÖRPERANLAGE MIT FÜLLKÖRPER-CONTAINER UND DREHSPRENGER-CONTAINER**
TRICKLE FILTER APPARATUS WITH CONTAINERS
SYSTÈME DE FILTRE PERCOLATEUR AVEC CONTENEURS

(30) Priorität: 15.05.2019 DE 102019003463
(43) Veröffentlichungstag der Anmeldung: 23.03.2022
(73) Patentinhaber: Brentwood Europe GmbH, 48493 Wettringen (DE)
(72) Erfinder: HENRICH, Christian, 51565 Bergisch Gladbach (DE); MÜLLER, Michael, 53332 Bornheim (DE)
(74) Vertreter: Hauck Patent- und Rechtsanwälte PartmbB
(86) Internationale Anmeldenummer: PCT/DE2020/000030
(87) Internationale Veröffentlichungsnummer: WO 2020/228875

(56) Entgegenhaltungen:
- WO-A1-2018/184057
- DE-A1- 2 831 434
- DE-U1- 7 816 518
- US-A- 4 427 548
- US-A1- 2017 113 955

## Beschreibung

Die vorliegende Erfindung betrifft eine Tropfkörperanlage.

Das Prinzip von derartigen Tropfkörperanlagen bzw. Tropfkörpern zur Abwasserklärung ist bekannt. Das Abwasser wird hierbei mit Hilfe eines Drehsprengers auf die Oberseite einer aus einer Vielzahl von Füllkörpern bestehenden Masse gesprüht, wobei durch die Tätigkeit von Mikroorganismen eine Abwasserklärung stattfindet. Das gereinigte Abwasser wird im unteren Bereich des Tropfkörpers aufgefangen und abgeführt. Als Füllkörper kommt eine Vielzahl von Varianten zum Einsatz, beispielsweise Lavagestein, Kunststoffkörper etc.

Solche Tropfkörperanlagen sind bekannt und befinden sich in einer Vielzahl von Ausführungsformen zur Abwasserklärung im Einsatz.

Ferner ist der Einsatz von genormten Großraumbehältern bzw. Containern im Bereich der Abwasserklärung bekannt. So ist beispielsweise aus der DE 37 21 981 A1 eine Reinigungsanlage für die Beseitigung von Verunreinigungen im Boden bekannt, die leicht in genormten Großraumbehältern untergebracht werden kann, welche ohne nennenswerten baulichen Aufwand problemlos vor Ort installiert werden können. Aus der DE 101 05 221 A1 sind ein Verfahren und eine Vorrichtung zur Elimination unerwünschter Wasserinhaltsstoffe bekannt, bei der die Vorrichtung in zwei 20'-Containern untergebracht werden kann. Auf diese Weise ist die gesamte Anlage leicht ortsveränderlich und kann mobil in besonders ausgewiesenen Brennpunkten zum Einsatz gebracht werden. Die DE 283 14 34 A offenbart eine Tropfkörperanlage mit einem Drehsprenger.

Der vorliegenden Erfindung liegt die Aufgabe zugrunde, eine Tropfkörperanlage vorzusehen, die eine schnelle Installation mit einfachem und kostengünstigem Betrieb ermöglicht. Diese Aufgabe wird erfindungsgemäß gelöst durch eine Tropfkörperanlage mit mindestens drei nebeneinander angeordneten transportablen Füllkörper-Containern, die mit Füllkörpern gefüllt sind, oben offen sind und unten eine abwasserdurchlässige Tragstruktur für die Füllkörper aufweisen, und einem einen Drehsprenger aufnehmenden transportablen Drehsprenger-Container, der auf dem mittleren Füllkörper-Container angeordnet ist, beidseitig zumindest teilweise offen ist, um eine Rotation des Drehsprengers zum zumindest teilweisen Überstreichen der Füllkörper-Container zu ermöglichen, und unten eine abwasserdurchlässige Tragstruktur aufweist.

Erfindungsgemäß wird damit eine Tropfkörperanlage mit modularem Aufbau vorgeschlagen. Die Erfindung beruht auf dem Grundgedanken, die Füllkörper des Tropfkörpers und den Drehsprenger des Tropfkörpers in voneinander getrennten Containern unterzubringen, die am Einsatzort (in situ) nebeneinander und aufeinander angeordnet und betriebsfertig gemacht werden können. In vielen Anwendungsbereichen können nämlich solche Containerlösungen sinnvoll sein. So beispielsweise für temporäre Militärbasen oder Flüchtlingscamps. Ausgezeichnet durch Mobilität, schnelle Installation, einfachen und kostengünstigen Betrieb sowie einfache Austauschbarkeit von einzelnen Containern (Containermodulen) kann eine solche "containerisierte Tropfkörperanlage" dazu beitragen, Abwasser in entlegenen Gebieten über eine robuste Technik zu säubern.

Die erfindungsgemäß ausgebildete Tropfkörperanlage umfasst mindestens vier Container, die drei Füllkörper-Container und einen Drehsprenger-Container umfassen. Die drei Füllkörper-Container werden am Einsatzort nebeneinander angeordnet und ggf. aneinander befestigt. Der Drehsprenger-Container wird auf den mittleren Füllkörper-Container gesetzt.

Die Füllkörper-Container sind oben offen und weisen unten eine abwasserdurchlässige Tragstruktur für die Füllkörper auf. Es können dabei beliebige Füllkörper Verwendung finden, die die entsprechenden Aufwuchsflächen zur Verfügung stellen. Da die Füllkörper-Container oben offen sind, kann das vom Drehsprenger verteilte Abwasser auf die Oberfläche der im Container befindlichen Füllkörper gelangen. Die unten im Container angeordnete Tragstruktur hält die Füllkörper im Container, ermöglicht aber einen Abfluss des gereinigten Abwassers.

Ferner besitzt die Tropfkörperanlage einen einen Drehsprenger aufnehmenden transportablen Drehsprenger-Container, der am Einsatzort der Tropfkörperanlage auf dem mittleren Füllkörper-Container angeordnet und ggf. darauf befestigt ist. Dieser Drehsprenger-Container ist beidseitig zumindest teilweise offen, so dass der im Container angeordnete Drehsprenger zur Rotation sich seitlich aus dem Container herausbewegen kann, um die darunter angeordneten Füllkörper-Container zumindest teilweise zu überstreichen. Der Drehsprenger-Container weist ebenfalls unten eine abwasserdurchlässige Tragstruktur auf, so dass Abwasser über die Unterseite des Containers abgeführt werden kann.

Der Drehsprenger-Container kann ferner den gesamten Antrieb desselben enthalten.

Vorzugsweise weisen die Füllkörper-Container und der Drehsprenger-Container gleiche Abmessungen auf, so dass sich alle Container-Module auf einfache Weise baukastenförmig zusammensetzen lassen. Hierbei können die Container ohne gegenseitige Befestigung nebeneinander und aufeinander gesetzt werden, oder sie werden über zusätzliche Befestigungsmittel aneinander arretiert. Da alle Container gleiche Abmessungen aufweisen, ist ein einfacher Austausch möglich.

Die Füllkörper-Container sowie der Drehsprenger-Container sind zweckmäßigerweise im Horizontalschnitt rechteckig ausgebildet. Es handelt sich dabei um kastenförmige Module mit zwei langen und zwei kurzen Seitenwänden. Zum Aufbau der Tropfkörperanlage werden die Füllkörper-Container mit Ihren langen Seitenwänden nebeneinander angeordnet und der Drehsprenger-Container wird in entsprechender Weise mit seiner Längsachse parallel zu den Längsachsen der Füllkörper-Container auf dem mittleren Füllkörper-Container abgesetzt. Der rotierende Drehsprenger kann dann im Wesentlichen alle Füllkörper-Container überstreichen.

Vorzugsweise weisen die Füllkörper-Container und der Drehsprenger-Container die Abmessungen von handelsüblichen genormten Großraubehältern auf. Es kann sich hierbei beispielsweise um die Abmessungen von bekannten 40'-Containern handeln. Derartige Container haben eine Länge von 12,2 m, eine Breite von 2,4 m und eine Höhe von 2,7 m bzw. 2,4 m.

Solche handelsüblichen Container lassen sich daher in einfacher Weise zu erfindungsgemäßen Füllkörper-Containern und Drehsprenger-Containern umrüsten.

Eine erfindungsgemäß ausgebildete Tropfkörperanlage kann auch mehrere aufeinander angeordnete Lagen von Füllkörper-Containern besitzen, beispielsweise zwei aufeinander angeordnete Lagen von Füllkörper-Containern, wobei sich der Drehsprenger-Container auf dem mittleren Füllkörper-Container der oberen Lage befindet.

Eine bevorzugte Lösung der Erfindung zeichnet sich dadurch aus, dass fünf Füllkörper-Container nebeneinander angeordnet sind, wobei bei einer zweilagigen Ausführungsform sowohl in der unteren Lage als auch in der oberen Lage jeweils fünf Füllkörper-Container vorgesehen sind.

Um einen einwandfreien Transport der Füllkörper-Container und des Drehsprenger-Containers zu ermöglichen, besitzen diese vorzugsweise einen öffenbaren Boden. Für den Transport kann der Boden geschlossen sein und am Betriebsort geöffnet werden, so dass Abwasser über die auf der Tragstruktur angeordneten Füllkörper nach unten austreten kann. Auch können die Container eine öffenbare Decke aufweisen, die dann ebenfalls am Betriebsort geöffnet werden kann. Ebenfalls können die Seitenwände des Drehsprenger-Containers für den Transport geschlossen sein, die dann am Betriebsort geöffnet werden, um eine Rotation des Drehsprengers zu ermöglichen.

Nachdem das Abwasser die einzelnen Füllkörper-Container passiert hat, gelangt es zum Boden der Anlage, um dort abgeführt zu werden. Die unterste Containerlage ist dabei vorzugsweise im Abstand vom Anlageboden angeordnet, damit das Abwasser aus den Containern austreten und sich auf dem Boden ansammeln kann. Die Anlage weist dabei vorzugsweise einen geneigten Boden mit Abflussrinne für das Abwasser auf, wobei die Abflussrinne beispielsweise an der Seite oder in der Mitte des Bodens angeordnet sein kann und der Boden eine entsprechende Neigung zur Abflussrinne hin aufweist. Als Boden kann beispielsweise eine geeignete Betonplatte dienen.

Um einen unproblematischen Transport des Drehsprenger-Containers zu ermöglichen, ist dieser insbesondere so ausgebildet, dass er sämtliche Teile (Drehsprenger-Arme, Antrieb, Abwasserzulauf etc.) aufnimmt. So weist der Drehsprenger vorzugsweise zwei gegenüberliegend angeordnete Sprengarme auf, die zu Transportzwecken im rechteckig ausgebildeten Container untergebracht werden können. An Ort und Stelle können dann beispielsweise weitere Arme am Drehsprenger montiert werden, so dass sich insgesamt beispielsweise vier oder mehr Arme ergeben.

Auch der Abwasserzulauf für den Drehsprenger erstreckt sich vorzugsweise innerhalb des Drehsprenger-Containers von einer Seitenwand desselben bis zur Drehsprengerachse. So kann sich der Zulauf beispielsweise an einer der beiden kurzen Seitenwände des Containers befinden.

Die Erfindung wird nachfolgend anhand eines Ausführungsbeispieles in Verbindung mit der Zeichnung im Einzelnen erläutert. Es zeigen:
- Figur 1: eine schematische Seitenansicht einer Tropfkörperanlage;
- Figur 2: eine schematische Seitenansicht der Tropfkörperanlage der Figur 1 in einer um 90° gedrehten Ansicht;
- Figur 3: eine schematische Draufsicht auf die Tropfkörperanlage der Figuren 1 und 2;
- Figur 4: einen schematischen Vertikalschnitt durch einen Füllkörper-Container; und
- Figur 5: einen schematischen Vertikalschnitt durch einen Drehsprenger-Container.

Das in den Figuren dargestellte Ausführungsbeispiel einer Tropfkörperanlage 1 besitzt einen modularen Aufbau und setzt sich insgesamt aus 11 Containern zusammen, die am Einsatzort übereinander und aufeinander angeordnet werden. Die Figuren zeigen die Tropfkörperanlage 1 im betriebsbereiten Zustand.

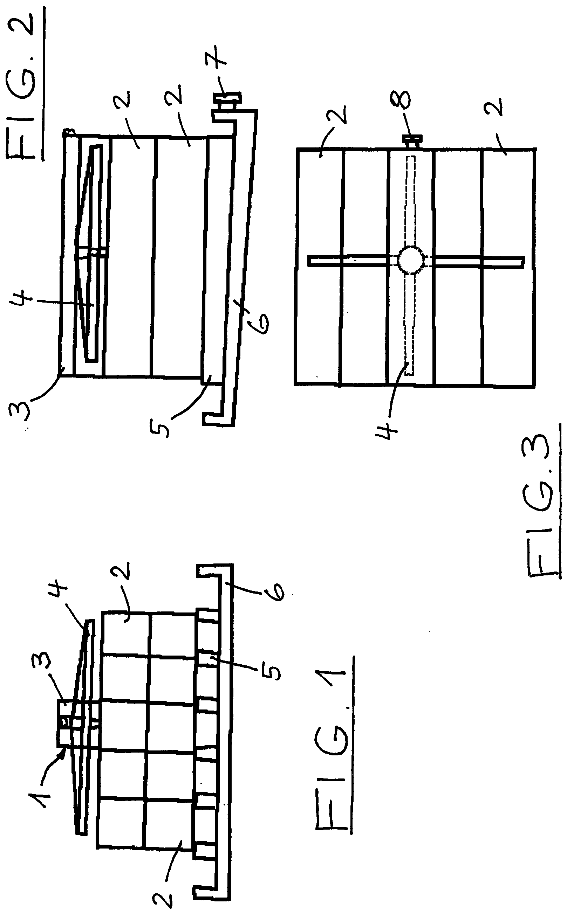

Die Anlage 1 besitzt zehn Füllkörper-Container 2, die in zwei Lagen zu jeweils fünf Containern übereinander angeordnet sind. Die untere Lage von Füllkörper-Containern 2 ruht auf einer Vielzahl von Klötzen 5, welche auf einer Bodenwanne 6 angeordnet sind. Figur 2 zeigt, dass die Bodenwanne 6 geneigt ausgebildet ist, so dass das die Füllkörper-Container 2 passierende Abwasser zu einer seitlichen Ablaufrinne fließt und dort über einen Ablauf 7 abgeführt wird.

Des Weiteren besitzt die Tropfkörperanlage 1 einen Drehsprenger-Container 3, der die gleiche Größe wie die Füllkörper-Container 2 besitzt und auf dem mittleren Füllkörper-Container 2 der oberen Lage angeordnet ist. Dieser Drehsprenger-Container 3 weist einen üblichen Drehsprenger eines Tropfkörpers auf, der einen zentralen Antrieb sowie zwei gegenüberliegende Sprengarme 4 besitzt. Sämtliche Teile des Drehsprengers sind im Drehsprenger-Container 3 untergebracht, wobei sich die Arme 4 des Drehsprengers im Transportzustand parallel zur Längsachse des Drehsprenger-Containers 3 erstrecken. Bei den Containern handelt es sich um solche, die die Abmessungen eines genormten 40'-Containers besitzen und einen rechteckigen Grundriss aufweisen. Die Draufsicht der Figur 3 zeigt, dass die Tropfkörperanlage 1 im zusammengesetzten Zustand den Grundriss eines Quadrates besitzt. Mit 8 ist hierbei der Abwasserzulauf bezeichnet, der zur Mitte des Drehsprengers führt, von wo aus das Abwasser in die Drehsprengerarme 15 geführt und von dort auf die Oberseite der Füllkörper-Container 2 abgegeben wird.

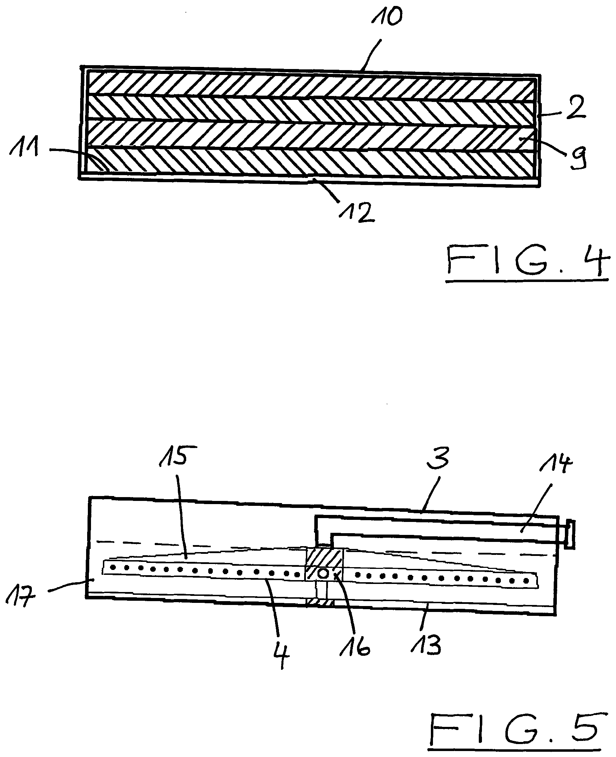

Figur 4 zeigt einen schematischen Schnitt durch einen Füllkörper-Container 2. Der Container 2 weist einen abnehmbaren Boden 12 auf, über dem eine geeignete Tragstruktur 11 für Füllkörper 9 angeordnet ist, bei der es sich beispielsweise um ein geeignetes Gitter oder um parallel angeordnete Stäbe bzw. Balken handeln kann. Auf der Tragstruktur 11 sind geeignete Füllkörper 9 in Schichten angeordnet, wie in Figur 4 gezeigt. Die Funktionsweise von derartigen Füllkörpern 9 in einem Tropfkörper ist bekannt und muss hier nicht im Einzelnen erläutern werden. Ferner weist der Container 2 eine abnehmbare Decke 10 auf.

Der Füllkörper-Container 2 kann an einer geeigneten Stelle mit den Füllkörpern 9 aufgefüllt werden und dort mit dem abnehmbaren Boden 12 sowie der abnehmbaren Decke 10 ausgestattet werden. Er wird dann zum Betriebsort transportiert und entsprechend angeordnet, wie in den Figuren 1 bis 3 gezeigt, wobei Boden 12 und Decke 10 entfernt werden.

Figur 5 zeigt einen schematischen Schnitt durch einen Drehsprenger-Container 3. Der Container 3 besitzt zumindest im unteren Bereich abnehmbare Seitenwände 17 sowie ebenfalls einen abnehmbaren Boden 13. Auch hier ist eine geeignete Tragstruktur vorgesehen.

Ein Drehsprenger 4 ist im Container 3 untergebracht und weist zwei gegenüberliegende Sprengarme 15 auf. Ein Abwasserzulaufrohr 14 erstreckt sich von der kurzen Seite des Containers 3 bis zur Mitte des Drehsprengers 4. Das zugeführte Abwasser wird von dort auf die Drehsprengerarme 15 verteilt und bei Rotation des Drehsprengers auf die Oberseiten der darunter angeordneten Füllkörper-Container 2 gesprüht. Der Antrieb des Drehsprengers 4 ist mit 16 bezeichnet.

Der Drehsprenger 4 kann am Betriebsort mit zusätzlichen Sprengarmen versehen werden und beispielsweise 4 Sprengarme 15 aufweisen, wie in Figur 3 gezeigt. Der Bedarf an zusätzlichen Armen richtet sich nach standortspezifischen Größen, wie Volumenstrom, notwendiger Sprühkraft etc.

Die Tropfkörperanlage 1 kann durch einfaches Aufeinanderstapeln der Container 2, 3 mehrlagig aufgebaut sein. So kann man beispielsweise mit drei Lagen eine gesamte Füllkörperhöhe von ca. 7,2 m erreichen. Dazu wären beispielsweise 15 Füllkörper-Container 2 erforderlich. Durch die Verwendung von ISO Containern, die selbst schon für eine Last von ca. 27 t ausgelegt sind, sind keine weiteren Maßnahmen zur Verbesserung der Statik beim Stapeln notwendig.

## Patentansprüche

1. Tropfkörperanlage (1) mit mindestens drei nebeneinander angeordneten transportablen Füllkörper-Containern (2), die mit Füllkörpern (9) gefüllt sind, oben offen sind und unten eine abwasserdurchlässige Tragstruktur (11) für die Füllkörper (9) aufweisen, und einem Drehsprenger (4), **dadurch gekennzeichnet, dass** der Drehsprenger (4) in einem transportablen Drehsprenger-Container (3) aufgenommen ist, der auf dem mittleren Füllkörper-Container (2) angeordnet ist, beidseitig zumindest teilweise offen ist, um eine Rotation des Drehsprengers (4) zum zumindest teilweisen Überstreichen der Füllkörper-Container (2) zu ermöglichen, und unten eine abwasserdurchlässige Tragstruktur aufweist.

2. Tropfkörperanlage nach Anspruch 1, **dadurch gekennzeichnet, dass** die Füllkörper-Container (2) und der Drehsprenger-Container (3) gleiche Abmessungen aufweisen.

3. Tropfkörperanlage nach Anspruch 1 oder 2, **dadurch gekennzeichnet, dass** die Füllkörper-Container (2) und der Drehsprenger-Container (3) im Horizontalschnitt rechteckig ausgebildet sind.

4. Tropfkörperanlage nach einem der vorangehenden Ansprüche, **dadurch gekennzeichnet, dass** die Füllkörper-Container (2) und der Drehsprenger-Container (3) die Abmessungen von handelsüblichen genormten ISO-Großraumbehältern aufweisen.

5. Tropfkörperanlage nach einem der vorangehenden Ansprüche, **dadurch gekennzeichnet, dass** sie mehrere aufeinander angeordnete Lagen von Füllkörper-Containern (2) besitzt.

6. Tropfkörperanlage nach einem der vorangehenden Ansprüche, **dadurch gekennzeichnet, dass** fünf Füllkörper-Container (2) nebeneinander angeordnet sind.

7. Tropfkörperanlage nach einem der vorangehenden Ansprüche, **dadurch gekennzeichnet, dass** die Füllkörper-Container (2) und der Drehsprenger-Container (3) einen öffenbaren Boden (12, 13) besitzen.

8. Tropfkörperanlage nach einem der vorangehenden Ansprüche, **dadurch gekennzeichnet, dass** sie einen geneigten Boden (6) mit Abflussrinne für das gereinigte Abwasser aufweist.

9. Tropfkörperanlage nach einem der vorangehenden Ansprüche, **dadurch gekennzeichnet, dass** sich ein Abwasserzulauf (14) im Drehsprenger (4) innerhalb des Drehsprenger-Containers (3) von einer Seitenwand desselben bis zur Drehsprenger-Achse erstreckt.

## Claims

1. A trickling filter system (1) comprising at least three transportable filler material containers (2), which are arranged one next to the other and which are filled with filler material (9), are open at the top, and have a wastewater-permeable support structure (11) at the bottom for the filler material (9), and comprising a rotary sprinkler (4), **characterized in that** the rotary sprinkler (4) is received in a transportable rotary sprinkler container (3), which is arranged on the middle filler material container (2), is at least partially open on both sides in order to allow for a rotation of the rotary sprinkler (4) in order to sweep over at least part of the filler material containers (2), and has a wastewater-permeable support structure at the bottom.

2. The trickling filter system according to claim 1, **characterized in that** the filler material containers (2) and the rotary sprinkler container (3) have the same dimensions.

3. The trickling filter system according to claim 1 or 2, **characterized in that** the filler material containers (2) and the rotary sprinkler container (3) are rectangular in horizontal cross-section.

4. The trickling filter system according to any one of the preceding claims, **characterized in that** the filler material containers (2) and the rotary sprinkler container (3) have the dimensions of conventional standardized ISO large-capacity tanks.

5. The trickling filter system according to any one of the preceding claims, **characterized in that** it has multiple layers of filler material containers (2) arranged one on top of the other.

6. The trickling filter system according to any one of the preceding claims, **characterized in that** five filler material containers (2) are arranged one next to the other.

7. The trickling filter system according to any one of the preceding claims, **characterized in that** the filler material containers (2) and the rotary sprinkler container (3) have a base (12, 13) that can be opened.

8. The trickling filter system according to any one of the preceding claims, **characterized in that** it comprises an inclined base (6) having a drainage channel for the treated wastewater.

9. The trickling filter system according to any one of the preceding claims, **characterized in that** a wastewater inlet (14) in the rotary sprinkler (4) extends inside the rotary sprinkler container (3) from one side wall thereof to the rotary sprinkler axis.

## Revendications

1. Système à lit bactérien (1) comprenant au moins trois conteneurs de corps de remplissage (2) transportables disposés côte à côte, lesquels sont remplis de corps de remplissage (9), sont ouverts sur le dessus et présentent une structure de support (11) perméable aux eaux usées pour les corps de remplissage (9) sur le bas, et un distributeur rotatif (4), **caractérisé en ce que** le distributeur rotatif (4) est reçu dans un conteneur de distributeur rotatif (3) transportable, lequel est disposé sur le conteneur de corps de remplissage (2) du milieu, est au moins partiellement ouvert sur les deux côtés, pour permettre une rotation du distributeur rotatif (4) pour le balayage au moins partiel des conteneurs de corps de remplissage (2), et présente une structure de support perméable aux eaux usées sur le bas.

2. Système à lit bactérien selon la revendication 1, **caractérisé en ce que** les conteneurs de corps de remplissage (2) et le conteneur de distributeur rotatif (3) présentent des dimensions égales.

3. Système à lit bactérien selon la revendication 1 ou 2, **caractérisé en ce que** les conteneurs de corps de remplissage (2) et le conteneur de distributeur rotatif (3) sont conçus de façon rectangulaire dans la section horizontale.

4. Système à lit bactérien selon l'une des revendications précédentes, **caractérisé en ce que** les conteneurs de corps de remplissage (2) et le conteneur de distributeur rotatif (3) présentent les dimensions de conteneurs à grande capacité usuels conformes aux normes ISO.

5. Système à lit bactérien selon l'une des revendications précédentes, **caractérisé en ce que** celui-ci possède plusieurs couches superposées de conteneurs de corps de remplissage (2).

6. Système à lit bactérien selon l'une des revendications précédentes, **caractérisé en ce que** cinq conteneurs de corps de remplissage (2) sont disposés côte à côte.

7. Système à lit bactérien selon l'une des revendications précédentes, **caractérisé en ce que** les conteneurs de corps de remplissage (2) et le conteneur de distributeur rotatif (3) possèdent un fond ouvrable (12, 13).

8. Système à lit bactérien selon l'une des revendications précédentes, **caractérisé en ce que** celui-ci présente un fond incliné (6) avec une gouttière pour les eaux usées traitées.

9. Système à lit bactérien selon l'une des revendications précédentes, **caractérisé en ce qu'**une arrivée d'eaux usées (14) s'étend dans le distributeur rotatif (4) à l'intérieur du conteneur de distributeur rotatif (3), à partir d'une paroi latérale de celui-ci jusqu'à l'axe du distributeur rotatif.
